# EUROPÄISCHE PATENTSCHRIFT

(11) **EP 0 936 189 B1**
(45) Veröffentlichungstag und Bekanntmachung des Hinweises auf die Patenterteilung: **22.08.2001**
(21) Anmeldenummer: 99250041.3
(22) Anmeldetag: 10.02.1999
(51) Int. Cl.: C02F 3/08

(54) **Anlage zur biologischen Abwasserbehandlung mit rotierenden Kontaktkörpern**
Device for biological water treatment with rotating contact bodies
Dispositif pour le traitement biologique des eaux usées avec des lits tournants

(30) Priorität: 10.02.1998 DE 19806356
(43) Veröffentlichungstag der Anmeldung: 18.08.1999
(73) Patentinhaber: Hauptmann, Helmuth, 17033 Neubrandenburg (DE)
(72) Erfinder: Hauptmann, Helmuth, 17033 Neubrandenburg (DE); Hauptmann, Jens, 17033 Neubrandenburg (DE)
(74) Vertreter: Wablat, Wolfgang, Dr.Dr.

(56) Entgegenhaltungen:
- FR-A- 2 133 351
- GB-A- 2 097 817
- US-A- 4 522 714

## Beschreibung

Die Erfindung betrifft eine Anlage zur biologischen Abwasserbehandlung mit Hilfe von auf festen Oberflächen lebenden Mikroorganismen, bestehend aus einem Klärbecken mit an gegenüberliegenden Seiten vorgesehenem Wasserzulauf und -ablauf sowie teilweise in das Wasser eintauchenden, zylindrischen oder primenförmigen und Kanäle aufweisenden rotierenden Tauchkörpern.

Bei einer aus der DE 296 20 624.5 bekannten Anlage dieser Art sind auf einer drehbaren Welle Festbettfüllkörper mit radial bis tangential verlaufenden Kanälen vorgesehen. Die einzelnen Festbettfüllkörper sind mittels einer Mehrzahl achsparallel durchgehender Bolzen miteinander verbunden. Am Ende der durchgehenden Bolzen ist ein Antriebsrad angebracht, über das die Festbettfüllkörper oder Tauchkörper in eine rotierende Bewegung versetzt werden. Die auf den Flächen der teilweise in das Wasser eintauchenden Tauchkörper vorhandenen Mikroorganismen sind zur Nährstoff- und Sauerstoffversorgung zeitweise mit dem Wasser und zeitweise mit dem Luftsauerstoff in Berührung. Damit sind gute Bedingungen für den Schadstoffabbau durch die Mikroorganismen geschaffen.

Die Reinigungswirkung der Mikroorganismen ist jedoch nicht immer gleichmäßig gut, da sich Temperaturschwankungen, insbesondere Temperaturabsenkungen bei niedrigen Umgebungstemperaturen, hierauf negativ auswirken. Darüber hinaus werden an den Tauchkörpern bei deren Rotation im Abwasser große Kräfte wirksam, so daß der Antrieb mit dem an den Verbindungsbolzen für die zylindrischen Tauchkörper befestigten Antriebsrad insofern Schwierigkeiten bereitet, als die erforderlichen Kräfte nicht aufgebracht werden können bzw. die Tauchkörper den großen Kräften nicht standhalten. Einerseits werden die Verbindungsbolzen überlastet und können sich gegebenenfalls in den Tauchkörpern lockern, und andererseits kann nicht die notwendige Kraft zu einer ausreichend schnellen Rotation der Tauchkörper - verbunden mit einer zu langsamen Durchströmung der Kanäle und einer zu geringen Reinigungswirkung und gegebenenfalls dem Zuwachsen der Kanäle - aufgebracht werden. Zudem gewährleistet die radiale, d.h. von einem Mittelpunkt nach außen verlaufende Kanalanordnung, keine optimale Durchströmung des Tauchkörpers.

Der Erfindung liegt daher die Aufgabe zugrunde, eine Anlage zur biologischen Abwasserbehandlung der eingangs erwähnten Art so auszubilden, daß ein hoher Reinigungseffekt und eine lange Lebensdauer der Anlage erzielt werden kann.

Erfindungsgemäß wird die Aufgabe bei einer Abwasser-behandlungsanlage gemäß dem Oberbegriff des Anspruchs 1 in der Weise gelöst, daß mehrere auf einer an der Wasserzulauf- und der Wasserablaufseite gelagerten Welle montierte Tauchkörper über an deren Stirnseite angebrachte Befestigungsplatten und jeweils einen zwischen diesen befestigten, zentrisch angeordneten, kreisförmigen Abstandskörper, der jeweils über ein Antriebsübertragungsmittel an ein Antrieborgan angeschlossen ist, miteinander verbunden sind.

Damit wird zum einen eine hohe Stabilität des Tauchkörpers erreicht und gleichzeitig kann auf den Tauchkörper über dessen gesamte Länge eine ausreichend große Antriebskraft ohne einseitige Überbeanspruchung aufgebracht werden. Es wird eine optimale Drehzahl des Tauchkörpers sowie eine gleichmäßige Überströmung der Bewuchsflächen mit dem Ergebnis einer guten biologischen Reinigungswirkung erzielt.

Die Welle mit den Tauchkörpern ist höhenverstellbar angeordnet, so daß die Anlage auf einen Betrieb als aerobes oder anaerobes System eingestellt werden kann.

Durch Veränderung der Drehzahl kann außerdem die in das Wasser eingetragene Sauerstoffmenge beeinflußt werden.

Gemäß einem anderen wichtigen Erfindungsmerkmal sind die auf der Welle angeordneten Tauchkörper jeweils um einen bestimmten Winkel zueinander gedreht oder versetzt angeordnet, und zwar in bezug auf die senkrecht zur Mittelachse verlaufenden Kanäle. Dadurch erfolgt die Wasseraufnahme in den einzelnen Tauchkörpern in unterschiedlichen Winkelstellungen der Welle, so daß ein Gewichtsausgleich der aufgenommenen Wassermassen erfolgt und die erforderliche Antriebsleistung verringert wird.

Nach einem weiteren Merkmal der Erfindung bestehen die Wände und der Boden des Klärbeckens aus wärmeisolierend wirkenden Kunststoffplatten, vorzugweise Polypropylenplatten mit glatter Innenseite und durch Stege verstärkter Außenseite. Dadurch ist auch bei niedrigen Umgebungstemperaturen eine im wesentlichen gleichbleibende Abwassertemperatur und damit auch eine hohe Reinigungswirkung der Mikroorganismen gewährleistet.

In vorteilhafter Weiterbildung der Erfindung verlaufen die im Tauchkörper vorgesehen Kanäle über den Querschnitt und die Länge des zylindrischen oder prismenförmig ausgebildeten Tauchkörpers parallel zueinander und im wesentlichen auch parallel zu den Stirnflächen des Tauchkörpers. Sie können aber auch leicht geneigt zu den Stirnflächen angeordnet sein. Durch diese Anordnung wird eine gute Wasseraufnahme in die Kanäle und deren gute Durchströmung bewirkt. Zur Vergrößerung der Kanalfläche bzw. des Wirkungsbereichs der Mikroorganismen können die Kanäle zickzack- oder wellenförmig verlaufen, und ihre Innenflächen können profiliert, zum Beispiel gewellt, ausgebildet sein.

Weitere Merkmale, zweckmäßige Ausgestaltungen und Vorteile der Erfindung ergeben sich aus den Unteransprüchen und dem nachfolgend wiedergegebenen Ausführungsbeispiel.

Ein Ausführungsbeispiel der Erfindung wird anhand der Zeichnung näher erläutert. Es zeigen:
- Fig. 1: eine teilweise im Schnitt dargestellte Ansicht einer Anlage zur biologischen Abwasserbehandlung mit in das Wasser teilweise eintauchenden, drehbar angeordneten Tauchkörpern; und
- Fig. 2: einen Schnitt längs der Linie AA in Fig. 1.

Die Abwasser-Behandlungsanlage umfaßt ein längliches (rechteckiges) Klärbecken 1 mit in dessen gegenüberliegenden Stirnseiten vorgesehenem Wasserzulauf 2 und Wasserablauf 3. Die Wände und der Boden des Klärbeckens 1 bestehen aus wärmeisolierend wirkenden, an den Innenseiten glatten Polypropylenplatten. Die glatten Innenseiten verhindern den Materialansatz im Klärbecken, während die gleichbleibende Temperatur die erforderlichen Lebensbedingungen für die Mikroorganismen schafft. In Längsrichtung des Klärbeckens 1 ist eine Welle 4 angeordnet, die im Bereich der Stirnseiten des Klärbeckens drehbar gelagert ist. Die Welle 4 ist in Lagern 10 gelagert, die zur Veränderung der Eintauchtiefe der Tauchkörper 5 höhenverstellbar angeordnet sein können. Auf der Welle 4 sind im Abstand zylindrische Tauchkörper 5a, 5b, 5c und 5d angeordnet, an deren Stirnseiten Befestigungsplatten 6 verankert sind. Gegenüberliegende Befestigungsplatten 6 von Tauchkörpern 5 sind durch als Ringe ausgebildete Abstandskörper 7 fest miteinander verbunden. Die Abstandskörper 7, die gleichzeitig als Antriebsübertragungsmittel dienen, weisen am Umfang angeordnete Erhöhungen 8 oder Zähne auf, die mit einem Antriebsriemen (nicht dargestellt) in Eingriff stehen. Durch die Verbindung aus Befestigungsplatten 6 und Abstandskörper 7 ist es möglich, die zur Rotation der Tauchkörper 5 erforderlichen Antriebskräfte auf die in sich instabilen Tauchkörper zu übertragen, und zwar ohne daß diese durch die Antriebsübertragungselemente in Mitleidenschaft gezogen werden.

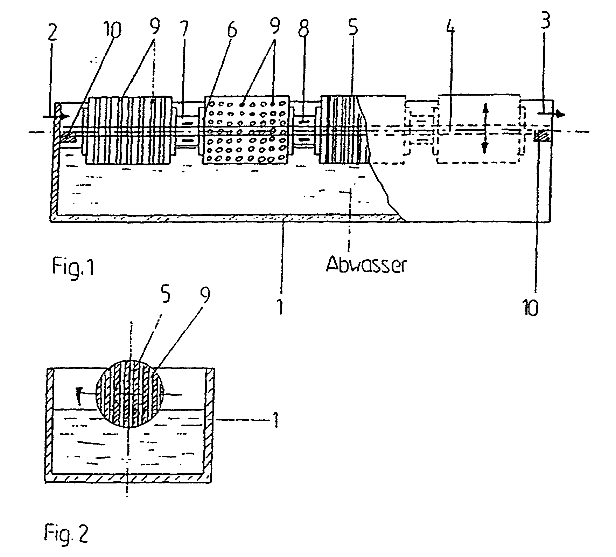

Wie aus den Figuren 1 und 2 ersichtlich ist, sind die rotierenden Tauchkörper 5 von parallelen, in Querrichtung des zylindrischen Tauchkörpers verlaufenden Kanälen 9 durchzogen, die auch zickzackförmig oder wellenförmig verlaufen können. Zur weiteren Vergrößerung der Kanalfläche bzw. Bewuchsfläche für die Mikroorganismen sind die Innenwände der Kanäle vorzugweise wellenförmig profiliert (nicht dargestellt). Gemäß Fig. 1 ist die Ausrichtung der Kanäle 9 in benachbarten Tauchkörpern 5a, 5b oder 5b, 5c usw. um 90° zueinander versetzt. Die Tauchkörper können auch als mehrkantiges, vorzugsweise sechs- oder achteckiges Prisma ausgebildet sein. Abgesehen von den etwa mittig durch die Achse des Tauchkörpers verlaufenden Kanälen 9 sind die übrigen Kanäle 9 an den am Umfang des Tauchkörpers 5 gebildeten Öffnungen schräg angeschnitten, so daß eine gute Wasseraufnahme und Durchwirbelung des Wassers beim Eintauchen in die Wasseroberfläche möglich ist. Der Durchmesser und die Anzahl der Kanäle 9 in den einzelen Tauchkörpern 5a, 5b, 5c und 5d ist unterschiedlich; und zwar sind in dem Tauchkörper 5a auf der Seite des Wasserzulaufs 2 größere Kanalquerschnitte vorgesehen, um ein Zuwachsen der Kanäle 9 in diesem mit abzubauenden Abwasserbestandteilen hochbelasteten Bereich des Klärbeckens 1 zu verhindern. Andererseits ist in dem Tauchkörper 5d auf der Seite des Wasserablaufs 3 eine die Reinigungswirkung erhöhende größere Anzahl Kanäle 9 mit geringerem Durchmeser vorgesehen, weil dort die Gefahr des Zuwachsens der Kanale aufgrund des schon vorgereinigten Abwassers nicht besteht. Der Kanaldurchmesser und die Anzahl der Kanäle 9 in den mittleren Tauchkörpern 5b und 5c liegt zwischen den Werten des ersten und letzten Tauchkörpers 5a und 5d. Aus Fig. 1 ist weiterhin die um 90° versetzte Anordnung der Kanale 9 zwischen benachbarten Tauchkörpern 5 erkennbar.

### Bezugszeichenliste

- 1: Klärbecken
- 2: Wasserzulauf
- 3: Wasserablauf
- 4: Welle
- 5a bis 5d: Tauchkörper
- 6: Befestigungsplatte
- 7: Abstandskörper
- 8: Erhöhungen (Zähne)
- 9: Kanäle
- 10: Lager

## Patentansprüche

1. Anlage zur biologischen Abwasserbehandlung mit auf festen Oberflächen lebenden Mikroorganismen, bestehend aus einem Klärbecken mit an gegenüberliegenden Seiten vorgesehenem Wasserzulauf und -ablauf sowie in das Wasser eintauchenden, zylindrischen oder prismenförmigen, rotierenden und Kanäle aufweisenden Tauchkörpern, dadurch gekennzeichnet, daß mehrere auf einer auf der Wasserzulaufseite und der Wasserablaufseite gelagerten Welle (4) montierte Tauchkörper (5) über an deren Stirnseiten angebrachte Befestigungsplatten (6) und jeweils einen zwischen diesen befestigten, zentrisch angeordneten, kreisförmigen Abstandskörper (7), der jeweils über ein Antriebsübertragungsmittel an ein Antrieborgan angeschlossen ist, miteinander verbunden sind.

2. Anlage nach Anspruch 1, dadurch gekennzeichnet, daß die Welle (4) höhenverstellbar angeordnet ist und die Tauchkörper (5) in der Funktion als aerobes System teilweise oder in der Funktion als anaerobes System vollständig in das Wasser eintauchbar sind, und daß zur Variation des Sauerstoffeintrags in das Wasser die Drehzahl der Welle (4) veränderlich ist.

3. Anlage nach Anspruch 1 und 2, dadurch gekennzeichnet, daß das Klärbecken (1) aus wärmeisolierend wirkenden Platten gebildet ist.

4. Anlage nach Anspruch 3, dadurch gekennzeichnet, daß die Platten aus Polypropylen bestehen und glatte Innenflächen sowie durch Stege versteifte Außenflächen aufweisen.

5. Anordnung nach Anspruch 1, dadurch gekennzeichnet, daß die Tauchkörper (5) in bezug auf ihre Länge und ihren Querschnitt parallel, im wesentlichen senkrecht zur Mittelachse des Tauchkörper (5) verlaufende durchgehende Kanäle (9) jeweils um einen bestimmten Zentriwinkel zueinander versetzt auf der Welle (4) angeordnet sind.

6. Anlage nach Anspruch 1 und 5, dadurch gekennzeichnet, daß die Kanäle (9) zickzack- oder wellenförmig verlaufen.

7. Anlage nach Anspruch 1, 5 und 6, dadurch gekennzeichnet, daß die Wandflächen der Kanäle (9) oberflächenvergrößernd profiliert sind.

8. Anlage nach Anspruch 7, dadurch gekennzeichnet, daß die Profilierung wellenförmig ausgebildet ist.

9. Anlage nach einem der Ansprüche 1 und 5 bis 8, dadurch gekennzeichnet, daß die Kanäle (9) in den verschiedenen Tauchkörpern (5) unterschiedlich große Durchmesser und die jeweiligen Tauchkörper eine dementsprechend unterschiedliche Anzahl Kanäle aufweisen.

10. Anlage nach Anspruch 8, dadurch gekennzeichnet, daß der Durchmesser der Kanäle (9) in den einzelnen Tauchkörpern (5) von der Wasserzulaufseite zur Wasserablaufseite hin abnimmt und und die Zahl der Kanäle (9) dementsprechend zunimmt.

11. Anlage nach Anspruch 1, dadurch gekennzeichnet, daß die Abstandskörper (7) als Scheiben oder Ringe ausgebildet sind, auf deren Umfangsfläche im Abstand Erhöhungen aufgebracht sind, die mit einem Antriebsriemen in Eingriff stehen.

12. Anlage nach Anspruch 1 und 11, dadurch gekennzeichnet, daß die Befestigungsplatten (6) und die Abstandskörper (7) aus Kunststoff bestehen und miteinander sowie mit den Tauchkörpern (5) einstückig verschweißt sind.

## Claims

1. A plant for biological wastewater treatment using microorganisms that live on solid surfaces, consisting of a settling basin with a water inlet and water outlet on opposing sides and continuously immersed cylindrical or prismatic submerged biological contactors that rotate *and* comprise ducts, characterized in that multiple submerged biological contactors (5) mounted on a shaft (4) that runs on bearings on the water inlet and outlet side are connected by mounting panels (6) attached to their front sides and one circular spacer (7) placed centrally between each two contactors and being connected to a driving element using transmission equipment.

2. The plant according to claim 1, characterized in that the shaft (4) is height-adjustable and the submerged biological contactors (5) can be partially immersed into the water when functioning as an aerobic system or completely immersed into the water when functioning as an anaerobic system, and that the speed of the shaft (4) can be changed to vary oxygen input.

3. The plant according to claims 1 and 2, characterized in that the settling basin (1) is built of heat-insulating boards.

4. The plant according to claim 3, characterized in that said boards are made of polypropylene and comprise smooth inner surfaces and outer surfaces reinforced by webs.

5. The arrangement according to claim 1, characterized in that the submerged biological contactors (5) are positioned on the shaft (4) offset against each other at a specific central angle relative to their through-going ducts (9) that generally run in vertical direction to the central axis of the submerged biological contactor (5).

6. The plant according to claims 1 and 5, characterized in that said ducts (9) have a zigzag or wave shape.

7. The plant according to claims 1, 5, and 6, characterized in that the wall surfaces of said ducts (9) have a surface-enlarging texture.

8. The plant according to claim 7, characterized in that said texture is wave-shaped.

9. The plant according to any one of claims 1 and 5 through 8, characterized in that the ducts (9) in the various submerged biological contactors (5) have different diameters so that said submerged biological contactors comprise an accordingly varying number of ducts.

10. The plant according to claim 8, characterized in that the diameters of the ducts (9) in the set of submerged biological contactors (5) decrease in size from the water inlet side towards the water outlet side while the number of ducts (9) increases accordingly.

11. The plant according to claim 1, characterized in that the spacers (7) are designed as discs or rings and comprise bulges across their peripheral surface that are engaged with a drive belt.

12. The plant according to claims 1 and 11, characterized in that the mounting panels (6) and spacers (7) are made of plastic and are contact-welded into one piece with each other and with the submerged biological contactors (5).

## Revendications

1. Installation pour le traitement biologique d'eaux usées au moyen de micro-organismes vivants sur des surfaces fixes, comprenant un bassin d'épuration avec une arrivée d'eau et une sortie d'eau prévues sur des côtés opposés, ainsi que des corps immergés plongés dans l'eau, cylindriques ou prismatiques, en rotation et comportant des canaux, caractérisée en ce que plusieurs corps immergés (5), montés sur un arbre (4) monté du côté de l'arrivée d'eau et du côté de la sortie d'eau, sont reliés les uns aux autres au moyen de plaques de fixation (6) fixées sur leurs faces frontales, et au moyen d'un corps d'écartement de forme circulaire respectif (7), fixé entre lesdites plaques, agencé au centre, et raccordé à un organe d'entraînement à l'aide d'un moyen de transmission respectif.

2. Installation selon la revendication 1, caractérisée en ce que l'arbre (4) est agencé avec faculté de réglage en hauteur, et en ce que les corps immergés (5) sont susceptibles d'être plongés dans l'eau soit partiellement dans la fonction d'un système aérobique, soit entièrement dans la fonction d'un système anaérobique, et ce que la vitesse de rotation de l'arbre (4) est susceptible d'être modifiée pour la variation de l'apport d'oxygène.

3. Installation selon les revendications 1 et 2, caractérisée en ce que le bassin d'épuration (1) est constitué à partir de plaques présentant un effet d'isolation thermique.

4. Installation selon la revendication 3, caractérisée en ce que les plaques sont en polypropylène et présentent des surfaces internes lisses ainsi que des surfaces externes rigidifiées par des nervures.

5. Installation selon la revendication 1, caractérisée en ce que les corps immergés (5) sont agencés, par référence à leurs canaux traversants (9) qui s'étendent sensiblement perpendiculairement à l'axe médian du corps immergé (5), en étant respectivement décalés les uns par rapport aux autres d'un angle au centre déterminé.

6. Installation selon les revendications 1 et 5, caractérisée en ce que les canaux (9) s'étendent sous forme de zigzags ou sous forme d'ondulations.

7. Installation selon les revendications 1, 5 et 6, caractérisée en ce que les surfaces des parois des canaux (9) sont profilées de manière à augmenter leur superficie.

8. Installation selon la revendication 7, caractérisée en ce que le profilage est réalisé de forme ondulée.

9. Installation selon l'une des revendications 1 et 5 cas 8, caractérisée en ce que les canaux (9) dans les différents corps immergés (5) présentent des diamètres de tailles différentes et en ce que les corps immergés respectifs comportent un nombre différent correspondant de canaux.

10. Installation selon la revendication 8, caractérisée en ce que le diamètre des canaux (9) dans les corps immergés individuels (5) diminue depuis le côté d'arrivée d'eau vers le côté de sortie d'eau, et en ce que le nombre des canaux (9) augmente en correspondance.

11. Installation selon la revendication 1, caractérisée en ce que les corps d'écartement (7) sont réalisés sous la forme de disques ou d'anneaux, sur la surface périphérique desquels sont ménagées des bosses écartées, lesquelles sont en engagement avec une courroie d'entraînement.

12. Installation selon les revendications 1 et 11, caractérisée en ce que les plaques de fixation (6) et les corps d'écartement (5) sont en matière plastique, et en ce qu'ils sont soudés d'une seule pièce les uns avec les autres, ainsi qu'avec les corps immergés (5).
